(19) Europäisches Patentamt European Patent Office Office européen des brevets

(11) **EP 2 546 003 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(51) Int Cl.:
**B09B 3/00** (2006.01)   **C10G 1/04** (2006.01)

(21) Anmeldenummer: **12175707.4**

(22) Anmeldetag: **10.07.2012**

(54) **VERFAHREN UND VORRICHTUNG ZUM TRENNEN VON STRASSENBELAG - ASPHALT ODER ÖLSAND GEMISCHEN**

METHOD AND DEVICE FOR SEPARATING ROADSURFACE - ASPHALT OR OILSAND MIXTURES

PROCÉDÉ ET DISPOSITIF DESTINÉS À LA SÉPARATION DES MÉLANGES DE REVÊTEMENT ROUTIERS - ASPHALTE OU DE SABLE PÉTROLIFÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011 CH 11682011**

(43) Veröffentlichungstag der Anmeldung:
**16.01.2013 Patentblatt 2013/03**

(73) Patentinhaber: **Reichmuth, Roger**
**8735 St. Gallenkappel (CH)**

(72) Erfinder:
• **Reichmuth, Roger**
**8735 St. Gallenkappel (CH)**

• **Blöchlinger, Oskar**
**altdorf (CH)**

(74) Vertreter: **Strässle, Simon**
**Isler & Pedrazzini AG**
**Giesshübelstrasse 45**
**Postfach 1772**
**8027 Zürich (CH)**

(56) Entgegenhaltungen:
**WO-A1-2008/110486    US-A- 4 545 891**
**US-A- 4 655 839**

**Beschreibung**

TECHNISCHES GEBIET

Die vorliegende Erfindung betrifft ein Verfahren und eine Vorrichtung zur Trennung von Gemischen, wie z.B. das Trennen von Strassen-Asphalt Belagsaufbruch in Bitumen und die übrigen Bestandteile oder auch zum Trennen von Ölsand in Öl und Sand.

STAND DER TECHNIK

Im Bereich der Sanierungen von Asphalt-Strassen ist Stand der Technik, den Strassenaufbruch mit vorgegebenem Brechwert zu brechen und zumindest teilweise als Kiesersatz einzusetzen. Der enthaltene Bitumen erfüllt dabei keine Aufgabe. Der verbleibende Teil des bitumenhaltigen Belagsmaterials hingegen wird auf Belagsaufbereitungsanlagen bis zu maximal 50 % dem Neumaterial beigegeben. Die Beschränkung auf maximal 50 % wird damit begründet, dass die Zusammensetzung des Aufbruchmaterials nicht genau definiert ist.

In Anbetracht des Umstandes aber, dass Bitumen ein Erdölderivat ist und nicht ohne weiteres anders hergestellt werden kann, drängt sich aus ökologischen und ökonomischen Gründen eine Rückgewinnung oder wenigstens eine andere Weiterverwertung des Bitumen auf.

Des Weiteren ist es so, dass der oben genannte Einsatz des alten bitumenhaltigen Belagsmaterials auf die genannten 50 % beschränkt ist, entsprechend ist es auch von Interesse, das ursprüngliche Kies in gereinigter Form wieder herzustellen, so dass es im Wesentlichen uneingeschränkt wieder verwendet werden kann.

Beim Trennen von Ölsand geht es darum, das darin enthaltene Erdöl vom Gestein, bzw. vom Sand zu trennen.

Aus der WO 2008110486 ist ein Verfahren zum Trennen von Gemischen insbesondere zum Rückgewinnen von Bitumen aus Strassenbelag-(Asphalt) Aufbruch oder zum Trennen von Ölsand in Öl und Sand, bzw. Gestein gemäß dem Oberbegriff des Anspruchs 1 bekannt. Das vorgeschlagene Verfahren ist dadurch gekennzeichnet, dass eine Salzschmelze für die Trennung eingesetzt wird, in welche der Aufbruch eingetragen wird, so dass ein Teil auf der Salzschmelze schwimmt und ein Teil in der Salzschmelze absinkt. Der bitumenhaltige Belagsausbruch wird so in

Bitumen, das auf der Schmelze aufschwimmt und Steinmaterial das in der Schmelze absinkt, getrennt, bzw. Ölsand wird in Öl, das auf der Schmelze aufschwimmt und Sand oder Gestein das in der Salzschmelze absinkt, getrennt. Dabei wird vorgeschlagen, die Temperatur der Salzschmelze im Bereich von 180°C-200°C einzustellen.

Aus der US 4,545,891 ist ein Verfahren zur Entfernung von Schwefelbestandteilen von Bitumen-Schieferton und zum Lösen von Kerogen-Bestandteilen daraus bekannt geworden. Dabei wird Bitumen-Schieferton in einem ersten Schritt einer Behandlung in einer Salzschmelze unterzogen, und bei diesem Schritt werden Schwefelbestandteile sowie Kerogen Bestandteile entfernt. Kerogen ist das polymere organische Material, aus dem bei zunehmender geologischer Versenkung und Aufheizung Kohlenwasserstoffe gebildet werden. Es kommt in sedimentären Gesteinen in Form von fein verteilten organischen Mazeralen vor und ist bei weitem die häufigste Form von organisch gebundenem Kohlenstoff in der Erdkruste. Es ist unlöslich in organischen Lösungsmitteln, nichtoxidierenden Säuren (HCl und HF) und Laugen. Kerogen selber ist weder Rohöl noch Bitumen gleichzusetzen noch im Sinne von diesen Systemen einsetzbar, es ist ein völlig anderes Material, namentlich ein Ausgangsmaterial für die Gewinnung von Schieferöl: Aus Kerogen kann in einem separaten aufwändigen Nachbehandlungsschritt in einer Pyrolyse, einer Hydrogenierung oder thermischer Zersetzung Schieferöl gewonnen werden. Die im Zusammenhang mit der Gewinnung von Kerogen in diesem Dokument genannte Salzschmelze besteht aus Alkali-hydroxiden, wobei diese bei hohen Temperaturen von 375 °C in der Schmelze gehalten werden und nur bei derart hohen Temperaturen bereits eine kurzzeitige Kontaktierung die Abtrennung von Kerogen ermöglicht.

Aus der US 4,655,839 ist ein Verfahren zur Behandlung von Eisen Chlorid-Abfällen, wie sie beispielsweise bei der Chlorierung von Titan anfallen, beschrieben. Dabei werden die Eisen Chlorid-Abfälle in ein geschmolzenes Calcium Chlorid Hydrat-Bad gegeben, wobei dann in diesem Bad nicht eine Auftrennung, sondern eine Reaktion des eingetragenen Eisen Chlorids in Eisenoxid stattfindet.

DARSTELLUNG DER ERFINDUNG

Es ist entsprechend unter anderem Aufgabe der vorliegenden Erfindung, ein verbessertes, d.h. insbesondere effizienteres, sicheres, und/oder energieeffizientes Trennungsverfahren im obigen Sinne zur Verfügung zu stellen.

Konkret betrifft die vorliegende Erfindung mit anderen Worten ein Verfahren gemäß Anspruch 1 sowie eine Vorrichtung gemäß Anspruch 15 zum Rückgewinnen von Bitumen aus Strassenbelag-(Asphalt) Aufbruch oder zum Trennen von Ölsand in Öl und Sand, respektive Gestein, wobei der bitumenhaltige Aufbruch respektive der Ölsand in eine Salzschmelze eingebracht wird, wobei Bitumen respektive Öl auf der Salzschmelze aufschwimmt und nach der Hindurchführung durch die Salzschmelze von der Salzschmelze abgeschöpft oder in anderer Weise abgetrennt wird, und wobei das Steinmaterial respektive der Sand/Gestein in der Salzschmelze absinken und ausgetragen werden.

Es zeigt sich nun als Resultat von umfangreichen Untersuchungen, dass ein solches Verfahren angesichts der stofflichen Eigenschaften des Bitumen und der Haftung des Bitumen am Steinmaterial respektive des Öls am Sand/Gestein die Führung eines solchen Prozesses nur dann effizient, d.h. mit hoher Trennungswirksamkeit und niedrigem Energieverbrauch, aber auch sicher, d.h. geschützt vor gefährlichen Dämpfen und der Flammenbildung, geführt werden kann, wenn einerseits die Temperatur der Salzschmelze in einem engen Bereich gehalten wird, namentlich im Bereich von 200 °C bis 300 °C liegt, und gleichzeitig die mittlere Verweilzeit des Aufbruchs in der Salzschmelze genügend lang ist, namentlich im Bereich von wenigstens 5 Minuten liegt. Wird der Prozess so geführt, so können Bitumen und/oder Steinmaterial respektive Öl und/oder Sand/Gestein wieder einer sinnvollen Nutzung zugeführt werden. Insbesondere kann beispielsweise das Steinmaterial so gut wie neuwertig beliebigen Verwendungen zugeführt werden.

Wird eine niedrigere Temperatur gewählt, so bleibt ein grosser Teil des Bitumen am Steinmaterial haften und das Steinmaterial kann entsprechend nicht ohne weitere Reinigungsstufe so gut wie neuwertig beliebigen Verwendungen zugeführt werden. Zudem muss dann eine an folgende Reinigungsstufe unter Verwendung von Wasser diesem hohen Anteil an Bitumen Rechnung tragen und erfordert bei der Aufreinigung des Wassers eine Berücksichtigung der Abtrennung von Bitumen und nicht nur der Trennung von Wasser und Salz. Des Weiteren wird bei niedrigerer Temperatur ein zu grosser Anteil an Salz aus der Salzschmelze ausgetragen. Damit aber die Trennung auch genügend lang in der Salzschmelze erfolgt, muss die mittlere Verweilzeit des Aufbruchs in der Salzschmelze im oben genannten Bereich liegen.

Wird eine höhere Temperatur gewählt, so springt, insbesondere bei lokalen Temperaturspitzen z.B. wegen ungenügenden Rührens, das Risiko der spontanen Flammenbildung unerwartet schnell hoch, zudem stellt sich eine hohe Rauchbildung aufgrund des oben aufschwimmenden Bitumen ein, und eine sichere Führung des Prozesses ist nicht mehr möglich.

Eine besonders effiziente Führung des Prozesses ist möglich, wenn die Temperatur der Salzschmelze im Bereich von 250 °C - 300 °C liegt.

Weiterhin liegt gemäss einer weiteren bevorzugten Ausführungsform die mittlere Verweilzeit des Aufbruchs in der Salzschmelze im Bereich von 5-30 min, vorzugsweise im Bereich von 10-20 min.

Das Verfahren gemäss Erfindung, welches es insbesondere ermöglicht, den Energiebedarf des Prozesses gering zu halten, ist dadurch gekennzeichnet, dass es sich bei der Salzschmelze um ein Gemisch von verschiedenen Salzen handelt, welches einen Schmelzpunkt von weniger als 200°C, vorzugsweise im Bereich von 80-150°C, insbesondere bevorzugt im Bereich von 100-140 °C aufweist.

Bevorzugtermassen handelt es sich um ein eutektisches Gemisch.

Es handelt sich bei der Salzschmelze um ein binäres oder ternäres Gemisch, aus $NaNO_3/LiNO_3/KNO_3$ (Natriumnitrat/Lithiumnitrat/Kaliumnitrat). Werden solche Mischungen gewählt, so können sie durch geeignete Einstellung der Anteile der Komponenten, beispielsweise in die Nähe des Eutektikums, auf einen Schmelzpunkt von im Bereich von 80-150 °C eingestellt werden. Besonders bevorzugt ist dabei ein binäres Gemisch aus $LiNO_3/KNO_3$ (Lithiumnitrat/Kaliumnitrat) mit einem 50-70 Molprozent-Anteil im von $KNO_3$ und einer Schmelztemperatur von im Bereich von 120-140 °C.

Alternativ ausgedrückt sind solche Gemische bevorzugt so aufgebaut, dass im geschmolzenen Zustand Kaliumnitrat in einem Gehalt von 55-80 Gewichtsprozent vorliegt und Lithiumnitrat in einem Gehalt von 20-45 Gewichtsprozent, sowie gegebenenfalls Calciumnitrat oder Natriumnitrat in einem Anteil von 0-48 Gewichtsprozent. Bevorzugtermassen ist der Anteil an Kaliumnitrat in einer binären Mischung im Bereich von 63-73 Gewichtsprozent, und der Anteil an Lithiumnitrat im Bereich von 27-37 Gewichtsprozent.

Es zeigt sich, dass solche Gemische gerade eine ideale Kombination aus niedrigem Schmelzpunkt und geeigneter Viskosität und Dichte im oben genannten Temperaturbereich in der Salzschmelze aufweisen, so dass die Trennung effizient durchgeführt werden kann innerhalb des angegebenen mittleren Fensters der Verweildauer des Aufbruchs in der Salzschmelze.

In diesem Zusammenhang werden bevorzugt Salzmischungen eingesetzt, die als Ausgangsmaterial rieselfähig vorbereitet sind. Dies kann entweder bereits produktionsbedingt gegeben sein, kann aber auch zusätzlich in einem entsprechenden Aufbereitungsschritt oder durch Zugabe von geeigneten Additiven sichergestellt werden. Für die oben genannten Nitrat-Gemische, das heisst binäre oder ternäre Gemische, auf Basis von aus $LiNO_3/KNO_3$ respektive $LiNO_3/KNO_3/NaNO_3$ (oder anstelle $NaNO_3$ $Ca(NO_3)_2$), können beispielsweise hochdisperse, bevorzugt hydrophobe und amorphe, Kieselsäuren hinzugefügt werden, wobei typischerweise im Gemisch von solchen Additiven im Bereich von 0.04-0.1 Gewichtsprozent, vorzugsweise im Bereich von 0.06-0.07 Gewichtsprozent, vorgelegt werden. Werden die einzelnen Komponenten individuell vorgelegt, so genügt es üblicherweise, solche Additive dem Lithiumnitrat beizufügen, dann in einem Anteil von 0.1-0.3 Gewichtsprozent, typischerweise im Bereich von 0.2 Gewichtsprozent. Möglich sind beispielsweise hochdisperse Kieselsäuren,, insbesondere bevorzugt mit einer hohen spezifischen (BET) Oberfläche im Bereich von 120-140 m2/g und/oder einer mittleren Teilchengrösse im Bereich von 14-18 nm, die hydrophobiert sind, beispielsweise mit DDS (Dimethyldichlorsilan). Möglich sind zum Beispiel Systeme des Typs Aerosil ®, erhältlich von Evonik, beispielsweise das Produkt Aerosil ® R 972.

Eine weitere bevorzugte Ausführungsform des vorgeschlagenen Verfahrens ist dadurch gekennzeichnet, dass das ausgetragene Steinmaterial respektive der Sand/Gestein unter Verwendung von Wasser gewaschen wird, und dass das im verwendeten Wasser enthaltene Salz respektive Salzgemisch anschliessend vom Wasser abgetrennt und wieder wenigstens teilweise der Salzschmelze zugeführt wird, wobei vorzugsweise dieser Waschprozess bei einer Wassertemperatur oberhalb von Raumtemperatur, insbesondere im Bereich von 40-80 °C, vorzugsweise im Bereich von 50-70 °C durchgeführt wird. Mit anderen Worten wird der Prozess bevorzugtermassen so geschlossen wie möglich geführt, was die Verwendung des Materials für die Salzschmelze angeht. Typischerweise sind niedrig schmelzende Salzgemische einerseits teuer und andererseits ökologisch nicht unbedenklich. Entsprechend ist es wichtig, diese Salze so weit wie möglich im Prozess zu enthalten und den Austrag zu minimieren. Dies ist möglich, wenn das unvermeidlich durch das aus der Salzschmelze geführte Steinmaterial durch Haftung an diesem aus der Schmelze ausgetragene Salz abgewaschen und anschliessend wieder vom Wasser abgetrennt und der Salzschmelze zugeführt wird. Entsprechend sind gute lösliche Salze von Vorteil, so beispielsweise die oben genannten spezifischen Mischungssysteme. Es zeigt sich dabei, dass die im Gestein gespeicherte Restwärme gerade genügt, um bei Raumtemperatur oder im Bereich zwischen 5 °C und Raumtemperatur zugeführtes Frischwasser (in der minimal erforderlichen Menge) auf die genannte bevorzugte Waschtemperatur zu bringen. Überraschenderweise zeigt es sich also, dass die Wassertemperatur ohne oder im Wesentlichen ohne weitere Energiezufuhr auf den optimalen Bereich eingestellt werden kann, indem das aus der Salzschmelze ausgetragene Steinmaterial im warmen Zustand respektive heissen Zustand direkt dem Waschprozess zugeführt wird.

Weiterhin bevorzugtermassen wird das ausgetragene Steinmaterial respektive der Sand/Gestein im noch warmen Zustand, d.h. typischerweise unmittelbar hinter der Salzschmelze dem Waschprozess unterzogen, so dass zur Erwärmung des Waschwassers wenigstens teilweise, vorzugsweise vollständig, die im Steinmaterial respektive Sand/Gestein gespeicherte Wärme eingesetzt wird.

Die Auftrennung der Salzlösung in Wasser und Salz respektive Salzgemisch geschieht bevorzugtermassen wenigstens teilweise durch Fällung/Setzung, gegebenenfalls in Kombination mit Zentrifugation, und/oder Verdampfen und/oder Umkehrosmose.

Es kann bei der Reinigung des Gesteinsmaterials respektive der Entfernung des daran anhaftenden Salzes ein mehrstufiges, vorzugsweise wenigstens zweistufiges oder wenigstens dreistufiges, Waschverfahren eingesetzt werden, bei welchem bevorzugtermassen Waschwasser und ausgetragenes Steinmaterial respektive Sand/Gestein nach dem Gegenstromprinzip geführt werden, und wobei die Trennung von Wasser und Salz respektive Salzgemisch vorzugsweise ausschliesslich mit dem Waschwasser durchgeführt wird, welches bei der ersten Waschstufe hinter der Salzschmelze abgeführt wird.

Zudem ist es, wie bevorzugt, möglich, die Trennung von Wasser und Salz respektive Salzgemisch mehrstufig, vorzugsweise wenigstens zweistufig oder wenigstens dreistufig durchzuführen, wobei vorzugsweise eine erste Trennungsstufe eine Fällungsstufe respektive ein Setzbecken ist, gegebenenfalls gefolgt oder kombiniert von einer Zentrifugation und vorzugsweise auf dieses eine zweite Trennungsstufe folgt unter Verwendung von Verdampfen und/oder Umkehrosmose.

Das teilweise aufgetrennte Wasser kann dabei hinter der ersten Trennungsstufe wenigstens teilweise in den Waschprozess zurückgeführt werden, vorzugsweise in eine der ersten Waschstufe hinter der Salzschmelze nachgeschalteten weitere Waschstufe.

Die erforderliche Prozesswärme, insbesondere zur Gewährleistung der Temperatur der Salzschmelze, und/oder zur Reinigung von Waschwasser respektive Trennung desselben von Salz und Verunreinigungen, und/oder zur Erwärmung von Waschwasser, kann wenigstens teilweise oder im Wesentlichen vollständig durch Verbrennung des abgetrennten Bitumen zur Verfügung gestellt wird. Wenn also das Bitumen, beispielsweise infolge von kleinen Sandpartikeln, die sich in der Salzschmelze vom Bitumen nicht trennen lassen, oder infolge anderer chemischer Eigenschaften, die durch die vorangehende Verwendung als Strassenbelag oder durch die Bearbeitung in der Salzschmelze nachhaltig und die Weiterverwendung verhindernd oder erschwerend geändert wurden, nicht oder nur beschränkt möglich ist, ist so eine ökologisch sinnvolle und energieeffiziente Nutzung im Gesamtprozess trotzdem möglich. Es zeigt sich bei Berechnungen, dass der Brennwert des Bitumen häufig gerade genügend ist, um den gesamten Energiebedarf des Prozesses zu stellen.

Bevorzugtermassen wird der Strassenbelag-Aufbruch bzw. Ölsand mit einem vorgegebenen Brechwert, vorzugsweise bis max. 32 mm Teilgrösse, der Salzschmelze zugeführt.

Gemäss einer weiteren bevorzugten Ausführungsform ist es möglich, das auf der Salzschmelze aufschwimmende, gegebenenfalls noch nicht genügend aufgetrennte Gemisch (Bitumen mit feinem Sand respektive Öl mit feinem Sand) noch einer weiteren Trennung zuzuführen. Insbesondere im Fall der Trennung von Bitumen kann beispielsweise vorteilhafter Weise die Bitumen-Fraktion weiter aufgetrennt werden, um weiteres feines Steinmaterial abzutrennen. Gemäss einer ganz besonders bevorzugten Ausführungsform wird dabei in einem ersten Schritt die abgetrennte Bitumen-Fraktion einem Mahlprozess (z.B. Schlagkreuzmühle) bis auf eine definierte Partikelgrösse unterzogen. Vorzugsweise beispielsweise auf eine Partikelgrösse kleiner gleich 0.5 mm. Anschliessend kann diese mechanisch verkleinerte Fraktion weiter aufgetrennt werden, entweder unter erneuter Verwendung einer Salzschmelze wie oben beschrieben oder unter Verwendung eines anderen Trennverfahrens. Ein derartiges anderes Trennverfahren kann beispielsweise ein physikalisch-chemisches Trennverfahren für feinkörnige Feststoffe aufgrund der unterschiedlichen Oberflächenbenetzbarkeit der Partikel sein. Dabei kann man sich beispielsweise bei Verwendung des bevorzugten Flotationsverfahrens zunutze machen, dass Gasblasen sich leicht an hydrophobe, d. h. durch Wasser schwer benetzbare Oberflächen, hier des Bitumens, anlagern und den Partikeln Auftrieb verleihen, so dass diese schwimmen. Unter diesen Bedingungen sammeln sich an den hydrophoben Partikeloberflächen die ebenfalls hydrophoben Gasblasen. Bevorzugt wird also ein Verfahren eingesetzt, das auch als Flotationsverfahren bekannt ist, bei dem in Wasser oder einem anderen Flotationsmittel dispergierte oder suspendierte Stoffe durch anhaftende Gasblasen an die Wasseroberfläche transportiert und dort mit einer Räumeinrichtung entfernt werden. Insbesondere bevorzugt können dabei als Flotationsmittel beispielsweise Wasser mit einem pH bevorzugt von weniger als 8 oder weniger als 7 eingesetzt werden. Bevorzugt werden dem Wasser dabei sog. Sammler beigefügt. Sammler machen den im Schaum auszubringenden Gemengeanteil, hier die Bitumenfraktion mit Kleinstpartikeln, wasserabstoßend (hydrophob), während die anderen Komponenten wasseranziehend (hydrophil) bleiben sollen. In die Aufschlämmung eingeblasene Luft haftet nur an den hydrophoben Teilchen und trägt sie zur Wasseroberfläche, während die hydrophilen Teilchen in der Trübe bleiben. Als Sammler eignen sich Schwefelverbindungen wie Xanthogenate, Dithiophosphate, Mercaptane, oder auch Amine, Alkylsulfonate, sowie manche Fettsäuresalze. Bekannte anionische Nicht-thio-Sammler sind beispielsweise gesättigte und ungesättigte Fettsäuren, insbesondere Tallölfettsäuren und Ölsäure, Alkylsulfate, insbesondere von Fettalkoholen oder Fettalkoholgemischen abgeleitete Alkylsulfate, Alkylarylsulfonate, Alkylsulfosuccinate, Alkylsulfosuccinamate und Acyllactylate. Bekannte kationische Nicht-thio-sammler sind beispielsweise primäre aliphatische Amine, insbesondere die von den Fettsäuren der pflanzlichen und tierischen Fette und Öle abstammenden Fettamine, sowie bestimmte alkylsubstituierte und hydroxyalkylsubstituierte Alkylendiamine und die wasserlöslichen Säureadditionssalze dieser Amine. Möglich sind Produkte des Typs Alaphen oder Ekofol der EKOF FLOTATION GmbH. Viele Sammler entwickeln wegen ihres Tensidcharakters selbst einen für die Flotation geeigneten Schaum. Es kann jedoch auch notwendig sein, durch spezielle Schäumer den Schaum zu entwickeln oder in geeigneter Weise zu modifizieren. Bekannte Schäumer für die Flotation sind Alkohole mit 4 bis 10 Kohlenstoffatomen, Polypropylenglykole, Polyethylenglykol- oder Polypropylenglykolether, Terpenalkohole (Pine Oils) und Kresylsäuren. Soweit erforderlich, werden den zu flotierenden Suspensionen (Trüben) modifizierende Reagenzien zugegeben, beispielsweise Regler für den pH-Wert, Aktivatoren für das im Schaum zu gewinnende Mineral oder Desaktivatoren für die im Schaum unerwünschten Mineralien, und gegebenenfalls auch Dispergatoren. Nach Mischen der Aufschlämmung bei eingestelltem pH und ggf. beigefügtem Sammler kann also zusätzlich ein Schäumer zum Stabilisieren der Luftblasen beigefügt und Luft eingetragen. Schäumer zerteilen die in die Suspension eingeblasene Luft in möglichst viele kleine Bläschen und stabilisieren den gebildeten Schaum. Der Schaum mit dem Bitumen kann abgeschöpft und getrennt werden, z.B. durch Filterung, ggf. in Kombination mit einem Waschschritt. Das Waschwasser kann im Flotationsprozess wiederverwendet werden. Der hydrophile Anteil kann ebenfalls z.B. durch Filterung, ggf. in Kombination mit einem Waschschritt abgetrennt werden.

Im Rahmen der experimentellen Überprüfung konnte eine genügende Trennung gewährleistet werden, so dass das abgetrennte Gesteinsmaterial (feiner Sand, absinkende hydrophile Fraktion) wenigstens noch als Füllmaterial weiterverwendet werden kann. Der aufschwimmende Schaumanteil kann gefiltert werden, der Festanteil ist in Bitumen weiter angereichert und enthält nur noch Feinstpartikel. Durch diese zusätzliche Trennung kann, wenn beispielsweise der Bitumen nur noch entsorgt werden kann, der Anteil an zu entsorgendem Material reduziert werden, oder es kann durch eine derartige zusätzliche Trennung der Bitumen hinsichtlich Heizwert pro Masse erhöht werden respektive sogar für eine Wiederverwendung zugänglich gemacht werden.

Des Weiteren betrifft die vorliegende Erfindung, wie eingangs erwähnt, eine Vorrichtung zur Durchführung des oben beschriebenen Verfahrens. Insbesondere betrifft sie eine Einrichtung zur Durchführung eines solchen Verfahrens zur Rückgewinnung von Bitumen aus Strassenbelag-(Asphalt)-Aufbruch, oder zum Trennen von Öl und Sand, respektive Gestein von Ölsand. Sie ist bevorzugtermassen gekennzeichnet durch

- wenigstens ein heizbares, vorzugsweise rinnenförmiges Becken zur Aufnahme und Verflüssigung eines Salzes oder Salzgemisches mit niedrigem Schmelzpunkt, vorzugsweise eines eutektischen Gemisches aus LiNO3/KNO3 (Lithiumnitrat/Kaliumnitrat), zur Herstellung einer Salzschmelze,
- mit dem Becken vorgeschalteten Zuführmitteln für den Strassenbelag-Aufbruch bzw. den Ölsand mit vorgegebenem Brechwert,
- mit im Becken angeordneten Fördermitteln zum Transport oder zum Rühren des Aufbruches bzw. Ölsand durch die Salzschmelze und
- mit am Ende der Durchlaufstrecke des Beckens angeordneten Abraummitteln zum Abschöpfen und Weiterleiten des sich vom Steinmaterial des Aufbruches gelösten und auf der Salzschmelze aufschwimmenden Bitumens, bzw. aufschwimmenden Öl,
- mit, am Ende der Durchlaufstrecke des Beckens angeordnete Austragungsmittel für das in der Salzschmelze abgesunkene bitumenfreie Steinmaterial, bzw. den Sand oder das Gestein des Ölsands, sowie

- wenigstens einer Waschstufe insbesondere zum abwaschen der Überreste der Salzschmelze am Steinmaterial, bzw. dem Sand oder dem Gestein des Ölsands,
- wenigstens eine Trennungsstufe zur Auftrennung von Salz respektive Salzgemisch und Waschwasser sowie
- Mittel zur wenigstens teilweisen Rückführung des abgetrennten Salzes respektive Salzgemisches in die Salzschmelze.

Weitere Ausführungsformen sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen:

Fig. 1   ein schematisches Ablaufdiagramm des Trenn- und Reinigungsprozesses;
Fig. 2   ein Schema eines Waschprozesses im Gegenlaufprinzip;
Fig. 3   ein Schema eines Waschprozesses mit Verdampfer;
Fig. 4   ein Schema eines Waschprozesses mit Zentrifuge; und
Fig. 5   ein Schema eines Waschprozesses mit Umkehrosmose.

BESCHREIBUNG BEVORZUGTER AUSFÜHRUNGSFORMEN

In der Schweiz werden jährlich 2.2 Mio. Tonnen Ausbauasphalt entweder ins Bauschuttrecycling oder in Deponien abgeführt. Das Recycling von alten Asphaltbelägen ist zwar verbreitet, jedoch stark eingeschränkt durch die schlechte Qualität dieses Materials. Anstatt den Strassenaufbruch zu deponieren oder in undefinierter (minderwertiger) Form in die laufende Asphaltproduktion hinein zu "verdünnen", soll dieser in seine Bestandteile Bindemittel (Bitumen) und Mineralkorn ("Splitt") in einer Salzschmelze separiert werden. Dabei wird eine Mischung von $KNO_3$ (Kaliumnitrat, 60 Mol-%) und $LiNO_3$ (Lithiumnitrat) eingesetzt, die oberhalb von 130°C eine Schmelze mit der Dichte 2.0g/cm3. Versuche ergeben, dass sich das Bitumen vom Mineralkorn ablöst und auf der Schmelze aufschwimmt, während das Mineralkorn absinkt. Das Mineralkorn kann dann rezykliert und das Bitumen allenfalls als Gussasphalt eingesetzt oder thermisch verwertet werden.

In den Bereich der Phase 1 wurden Versuche in einem 10-Liter-Salzbad durchgeführt. In diesem Bad wurden Proben von einigen Kilogramm Strassenaufbruch verarbeitet, womit genügend getrenntes Material gewonnen wurde, um eine Beurteilung der Verwertbarkeit der Produkte (Splitt, Bitumen) durchzuführen. Vorgängig zum Projekt wurde in Tastversuchen das Verfahren im Reagenzglas getestet. Mit den Versuchen im 10-Liter-Salzbad konnten die Ergebnisse reproduziert werden. Es hat sich auch gezeigt, dass sich das Bitumen ohne die Zugabe von weiteren Chemikalien gut vom Mineralkorn ablösen lässt bei Temperaturen von 250-300 °C. Der eingesetzte Technikumsreaktor war mit Heizdraht mit 6.7 kW Leistung ausgestattet und war von 0-500 °C stufenlos regelbar mittels Sollwertfühler.

Die Phase 2 bestand aus ausgiebigen Testreihen, bei welchen vor allem die Abtrennung des Bitumens vom mineralischen Korn im Vordergrund stand. Variabel waren vor allem die Temperatur, die Verweildauer in der Salzschmelze und die mechanische Beanspruchung durch das Rührwerk. Es wurden Versuche bei Temperaturen von 200-350°C und mit Aufenthaltsdauern vom Strassenaufbruch im Technikumsreaktor von 10-20 min durchgeführt. Beim Austrag der Splittfraktion wurden die qualitativ besten Ergebnisse bei Temperaturen zwischen 250-300 °C erzielt. Der Versuch bei oberhalb 300 °C, namentlich bei 350°C musste abgebrochen werden, weil sich das Bitumen im Technikumsreaktor entzündetet. Somit zeigte sich, dass die Reaktortemperatur nicht höher als 300°C sein durfte.

Im 100L-Schmelzbad wurden in dieser Phase 10kg Asphalt so behandelt, dass 80% des mineralischen Materials als gereinigter Splitt ausgebracht wurden und an diesem mineralischen Korn nicht mehr als 1% Bitumen anhaftet.

Bei den Trennversuchen bei einer Temperatur von 300°C und einer Verweildauer des Strassenaufbruchs im Reaktor von 10 und 20 min, wurden die erforderlichen Bedingungen hinsichtlich Auftrennung erfüllt.

Die Phase 3 beinhaltete die Rückgewinnung des am Splitt anhaftenden Salzgemisches nach dem abtrennen des Bitumens. Die Wirtschaftlichkeit des Prozesses hängt von den Salzverlusten ab. Da dieses einen wesentlichen Kostenfaktor und einen ökologischen Aspekt im Verfahren darstellt, musste eine grösstmögliche Rückgewinnung des Salzes mit einem geeigneten Waschverfahren gewährleistet werden.

Da das eingesetzte Salzgemisch sehr gut wasserlöslich ist, bot sich ein Waschprozess für die Produkte, insbesondere für das mineralische Korn, an. Da das Salzgemisch nur durch Eindampfen des Wassers wieder aus der Lösung entfernt werden kann, und da die Verdampfung des Wassers energieaufwändig ist, muss also mit möglichst wenig Wasser gewaschen werden.

10kg des mineralischen Produktes aus Phase 2 wurden so gewaschen, dass es weniger als 0.1% Salzgemisch enthält und dass das Waschwasser mit dem Energiegehalt der in 10 kg Asphalt enthaltenen 500g Bitumen eingedampft werden kann.

Hierfür wurden zwei Versuche durchgeführt. Beim ersten Versuch wurde die Löslichkeit von Salzgemisch in Wasser in Abhängigkeit der Temperatur geprüft. Dieser Versuch hat ergeben, dass die Löslichkeit von Salzgemisch in Wasser linear mit der Temperatur ansteigt. Bei einer Temperatur von 60 °C betragt wurde rund 1kg Salzgemisch in einem Liter Wasser gelöst. Wenn die Temperatur von 60 auf 20 °C gesenkt wurde, fällt rund 2/3 des gelösten Salzgemisches aus. Somit muss nicht das ganze Wasser verdampft werden, sondern nur Teil der mit den ausgefällten Salzgemisch abgezogen wurde. Mit dem zweiten Versuch wurde ein dreistufiger Waschprozess durchgeführt und geprüft, welche Menge Salzgemisch durch den Waschprozess verloren ging und welche Menge an Salzgemisch noch an den Gesteinskörnern anhaftete nach dem Waschprozess. Dieser Versuch hat gezeigt, dass nach dem Waschprozess weniger 1 % des Salzgemisches verloren geht und dass weniger als 0.1 % Salzgemisch an den Mineralkorn haftet. Das eindampfen des Wassers wird unter der Phase 4 beschrieben.

Die Phase 4 war wie folgt definiert: Die Ergebnisse des Grossversuchs entsprechen den Spezifikationen:

- Rückgewinnung 80% Mineralkorn mit weniger als 1% Bitumenanhaftung und weniger als 0.1% Salzgemisch
- Das Eindampfen des Waschwassers erfordert nicht mehr Energie, als in dem abgetrennten Bitumen steckt.

Es wurden 80% des mit dem Strassenaufbruch in den Reaktor eingebrachten Splitts zurück gewonnen. Um die Bitumenanhaftung am Mineralkorn zu bestimmen, wurde eine Probe analysiert. Zudem wurde auch eine Probe des Bitumens zur Qualitätsprüfung analysiert und eine Probe der Bitumenfraktion zur Bestimmung des Heizwertes analysiert.

Die Analyse des Splittes hat ergeben, dass der Anteil an anhaftendem Bitumen am Mineralkorn weniger als rund 0.3% beträgt und somit wieder verwendet werden kann. Die Analyse des Bitumens hat gezeigt, dass das Bitumen in vielen Fällen zu spröde ist für eine Wiederverwertung. Die Analyse des Heizwertes hat ergeben, dass dieser 5 MJ/kg beträgt. Dies ist rund 1/8 des Heizwertes von frischem Bitumen. Der Energiegehalt der aus dem Prozess gewonnenen Bitumenfraktion reicht aus, um die erforderliche Menge an Waschwasser zu verdampfen.

Der Verlust von Salzgemisch kann die Wirtschaftlichkeit des Prozesses empfindlich beeinflussen. Es ist daher wichtig, dass das Salzgemisch möglichst vollständig im Kreislauf erhalten werden muss. Die Verluste sind auf ein Minimum zu reduzieren. Diese Kriterien sind folgendermassen: 10kg des mineralischen Produktes werden so gewaschen, dass es weniger als 0.1% Salzgemisch enthält und dass das Waschwasser mit dem Energiegehalt der in 10 kg Asphalt enthaltenen 500g Bitumen eingedampft werden kann. Daraus ergibt sich für den Waschprozess, dass möglichst wenig Wasser möglichst viel Salzgemisch lösen muss. Des Weiteren braucht das Eindampfen von Wasser sehr viel Energie. Eine Einsparung wird erreicht, indem die temperaturabhängige Löslichkeit von Salzgemisch im Wasser durch die Wahl geeigneter Temperaturen ausgenutzt wird. Es wurden zwei Versuchsserien zur Bestimmung der Löslichkeit durchgeführt. Die somit bekannte Grenze der Löslichkeit liess Rückschlüsse auf die notwendige Menge Waschwasser zu. Da das endgültige Verfahren kontinuierlich ablaufen soll, kann die Wärmeenergie im Splitt nach dem Salzschmelze-Bad einen wesentlichen Beitrag zur Energieeffizienz der Anlage beitragen. Der Splitt wird voraussichtlich mit ca. 300 °C in den Waschprozess gegeben. Diese Temperatur trägt wesentlich zur Aufheizung des Waschwassers auf die erforderlichen 60°C bei. Die Berechnung der so im Prozess gehaltenen Wärmeenergie ist nachfolgend dargestellt.

Wärmemenge für 10kg H2O von 20°C auf 60°C zu erwärmen:

$$Q = c_{H2O} * m_{H2O} * \Delta T = 4182 \frac{J}{kg * °C} * 10\,kg * (60 - 20)\,°C = 1'672'800J = 1'672,8\,kJ$$

Freigesetzte Wärmemenge wenn 10 kg Splitt von 300 auf 60°C abgekühlt werden:

$$Q = c_{Gestein} * m_{Splitt} * \Delta T = 750 \frac{J}{kg * °C} * 10\,kg * (300 - 60)\,°C = 1'800'000J = 1'800\,kJ$$

Anhand der Berechnungen muss beim Waschprozess für die Erwärmung des Wassers von 20 auf 60 °C keine zusätzliche Energie aufgewendet werden, denn die im Splitt gespeichert Wärmeenergie reicht aus um das Wasser von 20 auf 60 °C aufzuwärmen. Einzig um das im ausgefällten Salzgemisch enthaltene Wasser auszudampfen muss zusätzlich noch Energie zugeführt werden.

Die Heizwert-Analyse des Bitumens hat folgendes Resultat ergeben:

Der Heizwert des ausgetragen Bitumens beträgt: H = 5'159 J/g = 5.159MJ/kg
Frisches Bitumen hat ein Heizwert der vergleichbar ist mit dem von Heizöl und beträgt ca. 40 MJ/kg. Somit hat das zurückgewonnene Bitumen einen um den Faktor 8 reduzierten Heizwert.

Wärmeenergie der Bitumenfraktion von 10kg Strassenaufbruch:

$$Q_{BF} = m * H = 1.760kg * 5'\,159'000\frac{J}{kg} = 9'079'840J = 9MJ$$

Mit der Wärmeenergie der Bitumenfraktion von 10 kg Strassenaufbruch kann folgende Menge Wasser verdampft werden:

$$Q_{BF} = c_{H2O} * \Delta T * m_{H2O} + r_{H2O} * m_{H2O}$$

$$\rightarrow m_{H2O} = \frac{Q_{BF}}{c_{H2O} * \Delta T + r_{H2O}} = \frac{9'079'840J}{4182\frac{J}{kg*°C} * (100 - 20)°C + 2'257'000\frac{J}{kg}} = 3.473kg$$

Mit der Bitumenfraktion von 10 kg Strassenaufbruch können also ca. 3.5 1 Wasser verdampft werden.

QBF Wärmeenergie der Bitumenfraktion J
CH2O Spezifische Wärmekapazität von H2O 4182 J/(kg*°C)
ΔT Temperaturdifferenz °C, K
mH2O Masse H2O kg
m Masse Bitumen kg
H Heizwert Bitumenfraktion J
rH2O spezifische Verdampfungswärme von Wasser 2'257 kJ/kg

Die Resultate der durchgeführten Vorversuche im 10 1 Reaktor sind in der folgenden Tabelle zusammengestellt:

| | Temperatur °C | Verweilzeit min | Total in Reaktor eingebracht Strassenaufbruch kg | Nach Trennung im Reaktor | | | | | |
| --- | --- | --- | --- | --- | --- | --- | --- | --- | --- |
| | | | | Splitt | | Bitumen | | Verlust | |
| | | | | kg | % | kg | % | kg | % |
| Versuch 1 | 180-190 | 10 | 1.5 | 1.315 | 87.7 | 0.030 | 2.0 | 0.155 | 10.3 |
| Versuch 2 | 200-220 | 10 | 1.5 | 1.345 | 89.7 | 0.050 | 3.3 | 0.105 | 7.0 |
| Versuch 3 | 200 | 20 | 0.663 | 0.606 | 91.5 | 0.026 | 3.9 | 0.031 | 4.6 |
| Versuch 4 | 250 | 20 | 0.663 | 0.488 | 73.6 | 0.167 | 25.1 | 0.008 | 1.3 |
| Versuch 5 | 300 | 20 | 0.673 | 0.454 | 68.5 | 0.219 | 31.5 | 0.000 | 0.0 |
| Versuch 6 | 300 | 10 | 1.5 | 1.130 | 75.3 | 0.235 | 15.7 | 0.135 | 9.0 |
| Versuch 7 | 300 | 10 | 1.5 | 1.185 | 79.0 | 0.310 | 20.6 | 0.005 | 0.4 |
| Versuch 8 | 250 | 30 | 1.5 | 1.255 | 83.7 | 0.175 | 11.6 | 0.070 | 4.7 |
| Versuch 9 | 250 | 20 | 1.5 | 1.315 | 87.7 | 0.110 | 7.3 | 0.075 | 5.0 |

Die Resultate der durchgeführten Versuche im 10o l Reaktor sind in der folgenden Tabelle zusammengestellt (beim Versuch bei 350 °C spontane Flammenbildung):

| | Temperatur °C | Verweilzeit min | Total in Reaktor eingebracht | Nach Trennung im Reaktor | | | | | |
|---|---|---|---|---|---|---|---|---|---|
| | | | | Splittfraktion | | Bitumenfraktion | | Verlust | |
| | | | Strassenaufbruch kg | Splitt kg | Bitumen kg | Splitt kg | Bitumen kg | Splitt kg | Bitumen kg |
| **Nullversuch 1** | 250 | 10 | 10 | 8.280 | 0.260 | 1.230 | 0.120 | 0.100 | 0.010 |
| **Nullversuch 2** | 300 | 10 | 10 | 7.560 | 0.080 | 1.590 | 0.270 | 0.460 | 0.040 |
| **Nullversuch 3** | 300 | 20 | 10 | 7.400 | 0.060 | 1.450 | 0.150 | 0.760 | 0.180 |
| **Nullversuch 4** | 250 | 20 | 10 | 7.850 | 0.160 | 1.310 | 0.160 | 0.450 | 0.070 |
| **Nullversuch 5** | 275 | 20 | 10 | 7.510 | 0.050 | 1.620 | 0.180 | 0.480 | 0.160 |
| **Nullversuch 6** | 350 | 20 | 10 | 7.380 | 0.060 | 1.760 | 0.150 | 0.470 | 0.180 |
| | | | % | % | % | % | % | % | % |
| **Nullversuch 1** | 250 | 10 | 100 | 86.2 | 66.7 | 12.8 | 30.8 | 1.0 | 2.5 |
| **Nullversuch 2** | 300 | 10 | 100 | 78.7 | 20.5 | 16.5 | 69.2 | 4.7 | 10.3 |
| **Nullversuch 3** | 300 | 20 | 100 | 77.0 | 15.3 | 15.1 | 38.5 | 7.9 | 46.2 |
| **Nullversuch 4** | 250 | 20 | 100 | 81.7 | 41.0 | 13.6 | 41.0 | 4.7 | 18.0 |
| **Nullversuch 5** | 275 | 20 | 100 | 78.1 | 12.8 | 16.9 | 46.2 | 5.0 | 41.0 |
| **Nullversuch 6** | 350 | 20 | 100 | 76.8 | 15.3 | 18.3 | 38.5 | 4.9 | 46.2 |

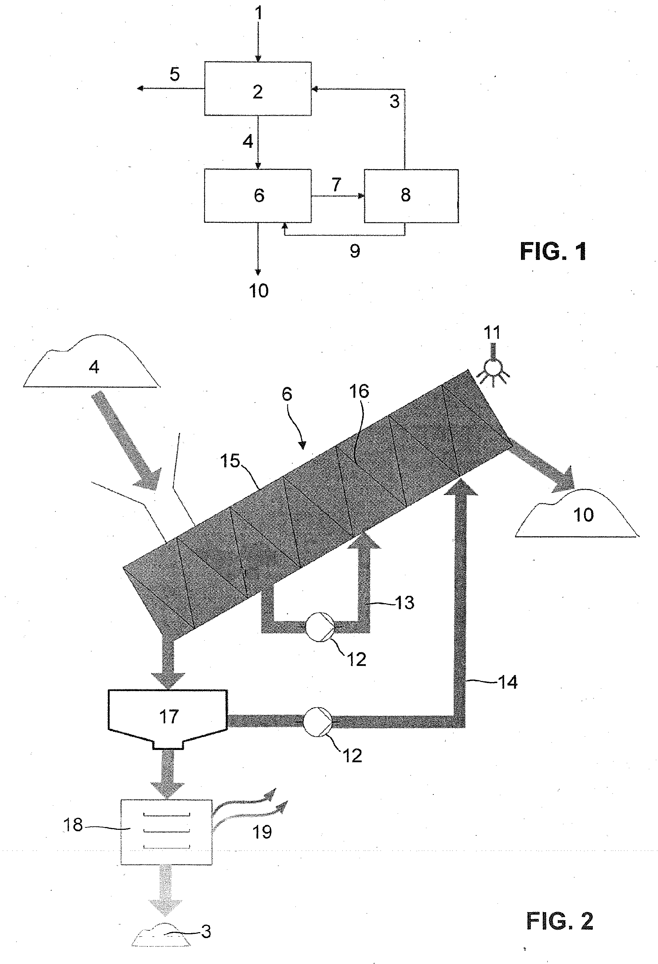

Der generelle Prozess ist in Figur 1 zusammengefasst. Der Strassenaufbruch 1, typischerweise nach einer Vorbehandlung zur Sicherstellung einer minimalen Bruchstückgrösse, wird in eine Salzschmelze 2 eingetragen. Das für die Salzschmelze 2 erforderliche Salz wird über den Pfad 3 über eine Rückführung zur Verfügung gestellt oder durch neue Hinzugabe. Der Anteil an Rückführung sollte so hoch wie möglich sein. Das gereinigte aber noch mit Salzgemisch verschmutzte Steinmaterial wird über den Pfad 4 aus der Salzschmelze 2 ausgetragen. Gleichermassen wird das Bitumen über den Pfad 5 aus der Salzschmelze 2 ausgetragen. Hinter der Salzschmelze 2 wird das Gesteinsmaterial einem Waschprozess 6 respektive einer Filtration unterzogen. Das dabei verwendete Waschwasser wird zur Salzlösung 7, die anschliessend einer Wasseraufbereitungsanlage 8 zugeführt wird. In dieser wird das Wasser von Salzgemisch getrennt. Das gereinigte Wasser kann über den Pfad 9 wieder dem Waschprozess 6 zugeführt werden, das vom Wasser abgetrennte Salzgemisch über den Pfad 3 der Salzschmelze zurückgeführt werden. Figur 2 zeigt einen Durchlaufprozess mit Verdampfer. Hier wird das in Figur 1 über den Pfad 4 dargestellte Steinmaterial mit anhaftendem Salzgemisch einer Reinigungsstufe in Form eines Waschzylinders 15 zugeführt. In diesem ist eine Transportvorrichtung, z.B. eine Transportspirale 16, gelagert, welche das Kies von unten nach oben befördert, während das Waschwasser mit einer Temperatur von ca. 60 °C im Gegenstrom von oben nach unten geführt ist. Das Waschwasser wird durch die im Kies 4 enthaltene Restwärme auf diese Temperatur gebracht. Das Waschwasser kann dabei über Pumpen 12 abschnittsweise über die Rückführung 13 zurückgeführt werden, um den Waschprozess zu optimieren. Frischwasser 11 wird am oberen Ende des Zylinders 15 eingeführt, am oberen Ende wird das gereinigte Kies 10 ausgetragen. Das am unteren Ende des Zylinders 15 anfallende Waschwasser verfügt über die höchste Salzkonzentration und kann nun einer Auftrennung zugeführt werden. Dies geschieht mehrstufig zunächst in einem Setzbecken 17, in welchem typischerweise die Wassertemperatur ca. 20 °C beträgt. Das überstehende Wasser verfügt nun über eine niedrigere Salzkonzentration und kann über eine Pumpe 12 über die Rückführung 14 wieder den Zylinder 15 zugeführt werden. Das im Setzbecken 17 anfallende Salzgemisch wird in diesem Fall einem Verdampfer 18 zugeführt, das verdampfte Wasser 19 kann entweder an die Umgebung abgegeben oder kondensiert und wiederum dem Zylinder 15 oder dem Abwasser zugeführt werden. Das abgetrennte Salzgemisch 3 wird anschliessend zwischengelagert und dann der Salzschmelze 2 wieder zugeführt oder direkt wieder der Salzschmelze 2 zugeführt.

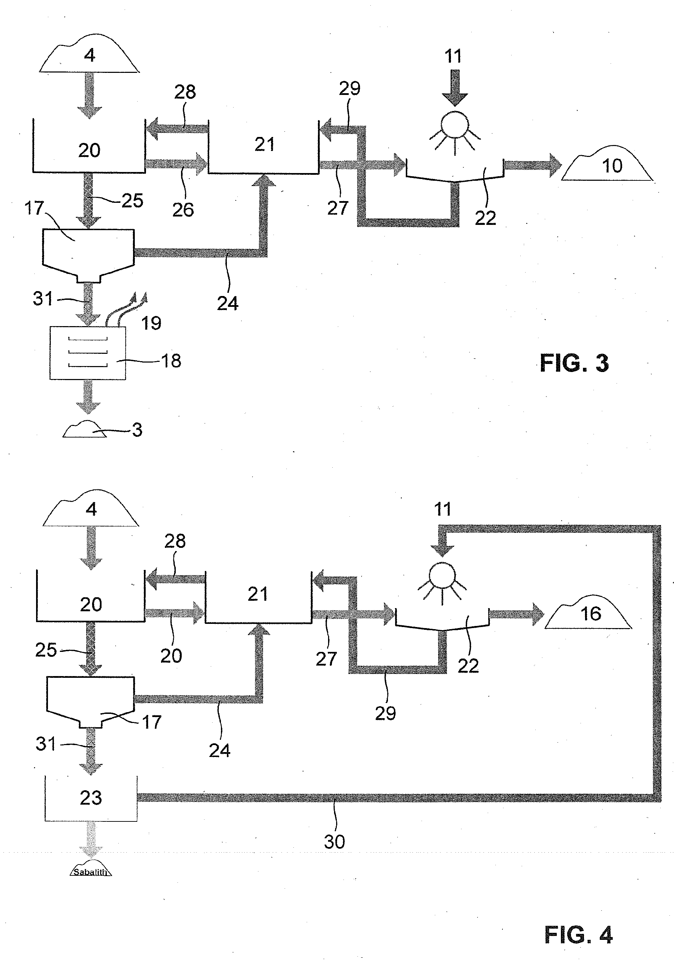

Figur 3 zeigt ebenfalls einen solchen Waschprozess, dieser ist hier aber mehrstufig ausgebildet. In einem ersten Schritt wird in einer Waschtrommel 20 bei einer Temperatur von ca. 60 °C eine Vorreinigung durchgeführt. Das vorgereinigte Gesteinsmaterial wird anschliessend über den Pfad 26 einer Waschtrommel 21 zugeführt, wo typischerweise im Wesentlichen die gleiche Temperatur herrscht. Anschliessend wird in einem abschliessenden Reinigungsbecken 22 eine letzte Reinigungsstufe gefahren, in dem das Gestein über den Pfad 27 in das Becken 23 geführt wird. Anschliessend liegt das gereinigte Gesteinsmaterial 10 für die weitere Verwendung wesentlichen ohne Einschränkungen vor. Das Reinigungswasser wird im Gegenstrom geführt. Frischwasser elf wird in das Becken 22 der letzten Reinigungsstufe geführt, dort wird es eine vergleichsweise niedrige Salzkonzentration ausbilden, anschliessend wird es über den Pfad 29 der Waschtrommel 21 zugeführt, in dieser wird sich die Salzkonzentration etwas weiter erhöhen, und anschliessend wird das Waschwasser aus der Trommel 21 über den Pfad 28 der Vorreinigung in der Einheit 20 zugeführt, wo dann die höchste Salzkonzentration ausgebildet wird.

Dieses Waschwasser mit der hohen Salzkonzentration wird anschliessend über den Pfad 25 dem Setzbecken 17 zugeführt. Das überstehende Wasser kann anschliessend über den Pfad 24 der Trommel 21 zugeführt werden. Das resultierende feuchte Salzgemisch wird über den Pfad 31 in diesem Fall einem Verdampfer 18 zugeführt, das Wasser abgedampft und das im Wesentlichen trockene Salzgemisch 3 steht dann für die Rückführung in die Salzschmelze 2 zur Verfügung.

Figur 4 die zeigt einen im wesentlichen analogen Prozess zur Figur 2, hier wird aber anstelle eines Verdampfers eine Zentrifuge 23 eingesetzt. Das daraus resultierende Wasser kann über den Pfad 30, da es sich um Wasser mit Frischwasserqualität handelt, direkt als Frischwasser 11 dem Becken 22 zugeführt werden.

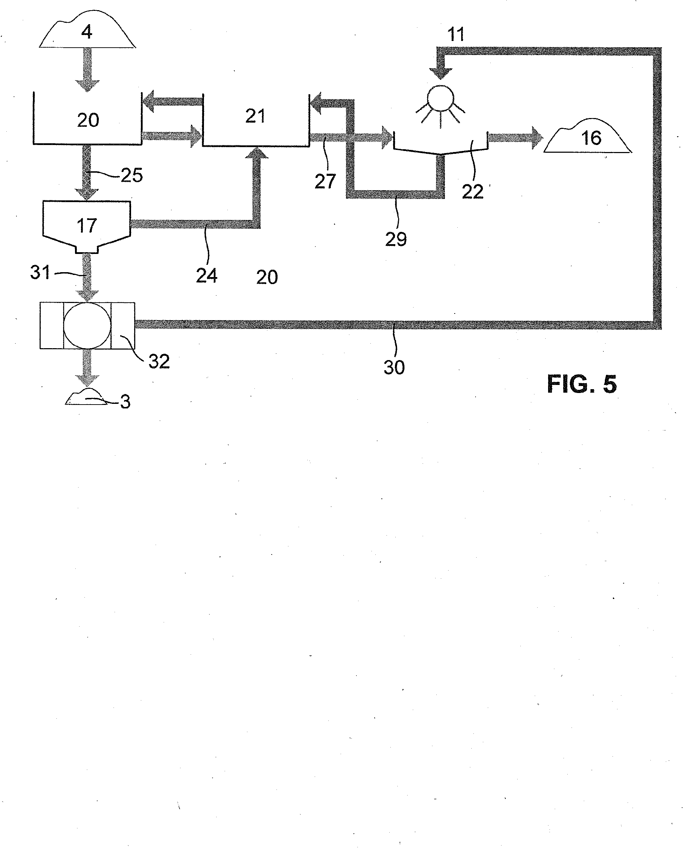

Figur 5 zeigt einen im wesentlichen analogen Prozess zur Figur 4, hier wird aber anstelle der Zentrifuge 23 eine Einheit mit einer Umkehrosmose 32 eingesetzt.

BEZUGSZEICHENLISTE

| | | | | |
|---|---|---|---|---|
| 1 | Strassenaufbruch | | 18 | Verdampfer |
| 2 | Auftrennung in Salzschmelze | | 19 | Wasserdampf |
| 3 | Salz, Salzgemisch | | 20 | Waschtrommel für Vorwäsche |
| 4 | Kies hinter Salzschmelze | | | |
| 5 | Bitumen | | 21 | Waschtrommel |
| 6 | Waschen/Filtern | | 22 | Waschbecken |
| 7 | Salzlösung | | 23 | Zentrifuge |
| 8 | Wasseraufbereitung | | 24 | Rückführung Wasser |
| 9 | Wasser | | 25 | Abtransport Wasser aus 20 |

(fortgesetzt)

| | | | |
|---|---|---|---|
| 10 | gereinigter Kies | 26-27 | Transport Kies mit Salz zwischen Waschbehältern |
| 11 | Frischwasserzufuhr | | |
| 12 | Pumpe | 28-29 | Transport Wasser zwischen Waschbehältern |
| 13 | Rückführung | | |
| 14 | Rückführung | 30 | Rückführung Frischwasser |
| 15 | Waschzylinder | 31 | abgesetzte Salzlösung |
| 16 | Transportspirale | 32 | Umkehrosmose-Einheit |
| 17 | Setzbecken | | |

**Patentansprüche**

1. Verfahren zum Rückgewinnen von Bitumen aus Strassenbelag-Asphalt Aufbruch (1) oder zum Trennen von Ölsand in Öl und Sand, respektive Gestein, wobei der bitumenhaltige Strassenbelag-Asphalt Aufbruch (1) respektive der Ölsand in eine Salzschmelze (2) eingebracht wird, wobei Bitumen (5) respektive Öl auf der Salzschmelze (2) aufschwimmt und nach der Hindurchführung durch die Salzschmelze (2) von der Salzschmelze (2) abgeschöpft wird, und wobei das Steinmaterial (3) respektive der Sand und/oder das Gestein in der Salzschmelze (2) absinken und ausgetragen werden,
   **dadurch gekennzeichnet, dass** die Temperatur der Salzschmelze (2) im Bereich von 200 °C bis 300 °C liegt und die mittlere Verweilzeit des Strassenbelag-Asphalt Aufbruchs (1) in der Salzschmelze (2) im Bereich von wenigstens 5 Minuten liegt,
   dass es sich bei der Salzschmelze (2) um ein Gemisch von verschiedenen Salzen handelt, welches einen Schmelzpunkt von weniger als 200 °C aufweist, in Form eines ternären Gemisches auf Basis von $NaNO_3$/$LiNO_3$/$KNO_3$ oder in Form eines binären Gemisches auf Basis von $LiNO_3$/$KNO_3$.

2. Verfahren nach Anspruch 1, **dadurch gekennzeichnet, dass** die Temperatur der Salzschmelze (2) im Bereich von 250 °C - 300 °C liegt.

3. Verfahren nach einem der vorhergehenden Ansprüche, **dadurch gekennzeichnet, dass** die mittlere Verweilzeit des Strassenbelag-Asphalt Aufbruchs (1) in der Salzschmelze (2) im Bereich von 5-30 min, vorzugsweise im Bereich von 10-20 min liegt.

4. Verfahren nach einem der vorhergehenden Ansprüche, **dadurch gekennzeichnet, dass** es sich beim Gemisch von verschiedenen Salzen um eines handelt, welches einen Schmelzpunkt im Bereich von 80-150°C, bevorzugt im Bereich von 100-140 °C aufweist.

5. Verfahren nach einem der vorhergehenden Ansprüche, **dadurch gekennzeichnet, dass** es sich um ein eutektisches Gemisch handelt, und/oder um ein binäres Gemisch aus $LiNO_3$/$KNO_3$ mit einem 50-70 Molprozent-Anteil im von $KNO_3$ und einer Schmelztemperatur von im Bereich von 120-140 °C.

6. Verfahren nach einem der vorhergehenden Ansprüche, **dadurch gekennzeichnet, dass** das ausgetragene Steinmaterial (3) respektive der Sand und/oder das Gestein unter Verwendung von Wasser gewaschen wird, und dass das im verwendeten Wasser enthaltene Salz respektive Salzgemisch anschliessend vom Wasser abgetrennt und wieder wenigstens teilweise der Salzschmelze zugeführt wird, wobei vorzugsweise dieser Waschprozess bei einer Wassertemperatur oberhalb von Raumtemperatur, insbesondere im Bereich von 40-80 °C, vorzugsweise im Bereich von 50-70 °C durchgeführt wird.

7. Verfahren nach Anspruch 6, **dadurch gekennzeichnet, dass** das ausgetragene Steinmaterial (3) respektive der Sand und/oder das Gestein im noch warmen Zustand hinter der Salzschmelze dem Waschprozess unterzogen wird, und dass zur Erwärmung des Waschwassers wenigstens teilweise, vorzugsweise vollständig, die im Steinmaterial (3) respektive Sand und/oder Gestein gespeicherte Wärme eingesetzt wird.

8. Verfahren nach einem der vorhergehenden Ansprüche 6-7, **dadurch gekennzeichnet, dass** die Auftrennung der Salzlösung wenigstens teilweise durch Fällung, gegebenenfalls in Kombination mit Zentrifugation, und/oder Verdampfen und/oder Umkehrosmose stattfindet.

9. Verfahren nach einem der vorhergehenden Ansprüche 6-8, **dadurch gekennzeichnet, dass** ein mehrstufiges, vorzugsweise wenigstens zweistufiges oder wenigstens dreistufiges, Waschverfahren eingesetzt wird, bei welchem Waschwasser und ausgetragenes Steinmaterial (3) respektive Sand und/oder Gestein nach dem Gegenstromprinzip geführt werden, und wobei die Trennung von Wasser und Salz respektive Salzgemisch vorzugsweise ausschliesslich mit dem Waschwasser durchgeführt wird, welches bei der ersten Waschstufe (20) hinter der Salzschmelze (2) abgeführt wird.

10. Verfahren nach einem der vorhergehenden Ansprüche 6-9, **dadurch gekennzeichnet, dass** die Trennung von Wasser und Salz respektive Salzgemisch mehrstufig, vorzugsweise wenigstens zweistufig oder wenigstens dreistufig durchgeführt wird, wobei vorzugsweise eine erste Trennungsstufe (17) eine Fällungsstufe respektive ein Setzbecken ist, gegebenenfalls gefolgt oder kombiniert von einer Zentrifugation (23) und vorzugsweise auf dieses eine zweite Trennungsstufe folgt unter Verwendung von Verdampfen (18) und/oder Umkehrosmose (32).

11. Verfahren nach Anspruch 10, **dadurch gekennzeichnet, dass** das teilweise aufgetrennte Wasser hinter der ersten Trennungsstufe (17) wenigstens teilweise in den Waschprozess zurückgeführt wird, vorzugsweise in eine der ersten Waschstufe (20) hinter der Salzschmelze nachgeschalteten weitere Waschstufe (21).

12. Verfahren nach einem der vorhergehenden Ansprüche, **dadurch gekennzeichnet, dass** die erforderliche Prozesswärme, insbesondere zur Gewährleistung der Temperatur der Salzschmelze, und/oder zur Reinigung von Waschwasser respektive Trennung desselben von Salz und Verunreinigungen, und/oder zur Erwärmung von Waschwasser, wenigstens teilweise oder vollständig durch Verbrennung des abgetrennten Bitumen (5) zur Verfügung gestellt wird.

13. Verfahren nach einem der vorhergehenden Ansprüche, **dadurch gekennzeichnet, dass** der Strassenbelag-Asphalt Aufbruch (1) bzw. Ölsand mit einem vorgegebenen Brechwert, vorzugsweise bis max. 32 mm Teilgrösse, der Salzschmelze (2) zugeführt wird.

14. Verfahren nach einem der vorhergehenden Ansprüche, **dadurch gekennzeichnet, dass** das auf der Salzschmelze (2) aufschwimmende und nach der Hindurchführung durch die Salzschmelze (2) von der Salzschmelze (2) abgeschöpfte Bitumen (5) respektive Öl einer weiteren Trennung zugeführt wird, vorzugsweise indem in einem ersten Schritt die abgetrennte Fraktion einem Mahlprozess bis auf eine definierte Partikelgrösse unterzogen wird, und in einem zweiten Schritt diese mechanisch verkleinerte Fraktion weiter aufgetrennt wird, entweder unter erneuter Verwendung einer Salzschmelze oder unter Verwendung eines anderen Trennverfahrens, vorzugsweise eines physikalisch-chemischen Trennverfahrens für feinkörnige Feststoffe aufgrund der unterschiedlichen Oberflächenbenetzbarkeit der Partikel, vorzugsweise eines Flotationsverfahrens.

15. Einrichtung konfiguriert zur Durchführung des Verfahrens nach einem der Ansprüche 1 bis 14 zur Rückgewinnung von Bitumen aus Strassenbelag-Asphalt Aufbruch (1), oder zum Trennen von Öl und Sand, respektive Gestein von Ölsand umfassend wenigstens ein heizbares, vorzugsweise rinnenförmiges Becken zur Aufnahme und Verflüssigung des Salzgemisches mit Schmelzpunkt von weniger als 200 °C, vorzugsweise eines eutektischen Gemisches aus $LiNO_3$/$KNO_3$, zur Herstellung einer Salzschmelze (2),
mit dem Becken (1) vorgeschalteten Zuführmitteln für den Strassenbelag-Asphalt Aufbruch (1) bzw. den Ölsand mit vorgegebenem Brechwert,
mit im Becken angeordneten Fördermitteln zum Transport oder zum Rühren des Strassenbelag-Asphalt Aufbruches (1) bzw. Ölsand durch die Salzschmelze (2) und mit am Ende der Durchlaufstrecke des Beckens angeordneten Abraummitteln zum Abschöpfen und Weiterleiten des sich vom Steinmaterial des Strassenbelag-Asphalt Aufbruches (1) gelösten und auf der Salzschmelze (2) aufschwimmenden Bitumens (5), bzw. aufschwimmenden Öl,
mit, am Ende der Durchlaufstrecke des Beckens angeordnete Austragungsmittel für das in der Salzschmelze abgesunkene bitumenfreie Steinmaterial, bzw. den Sand oder das Gestein des Ölsands, sowie
wenigstens eine Waschstufe (15, 16, 20, 21, 22) zum abwaschen der Überreste der Salzschmelze am Steinmaterial, bzw. dem Sand oder dem Gestein des Ölsands, wenigstens eine Trennungsstufe (17,18,23,32) zur Auftrennung von Salz respektive Salzgemisch und Waschwasser sowie Mittel zur wenigstens teilweisen Rückführung des abgetrennten Salzes respektive Salzgemisches in die Salzschmelze (2).

## Claims

1. Method for recovering bitumen from road surfacing-asphalt breakup (1) or for separating oil sand into oil and sand and stone, respectively, wherein the bitumen-containing road surfacing-asphalt breakup (1) or the oil sand is introduced into a salt melt (2), wherein bitumen (5) or oil, respectively, floats on the salt melt (2) and after passage through the salt melt (2) is skimmed off from the salt melt (2), and wherein the stone material (3) and the sand, respectively, and/or the stone in the salt melt (2) sinks and is carried away,

**characterized in that** the temperature of the salt melt (2) lies in the range from 200°C to 300°C and the average dwell time of the road surfacing-asphalt breakup (1) in the salt melt (2) lies in the region of at least 5 minutes, that the salt melt (2) is a mixture of different salts, which has a melting point of less than 200°C, in the form of a ternary mixture on the basis of $NaNO_3/LiNO_3/KNO_3$ or in the form of a binary mixture on the basis of $LiNO_3/KNO_3$.

2. Method according to claim 1, **characterized in that** the temperature of the salt melt (2) lies in the range from 250°C - 300°C.

3. Method according to any one of the preceding claims, **characterized in that** the average dwell time of the road surfacing-asphalt breakup (1) in the salt melt (2) lies in the range of from 5-30 min, preferably in the range of from 10-20 min.

4. Method according to any one of the preceding claims, **characterized in that** the mixture of different salts is one, which has a melting point in the range of from 80-150°C, preferably in the range of from 100-140°C.

5. Method according any one of the preceding claims, **characterized in that** it is an eutectic mixture, and/or a binary mixture of $LiNO_3/KNO_3$ with a 50-70 mole percent proportion of $KNO_3$ and a melting temperature in the range of from 120-140°C.

6. Method according to any one of the preceding claims, **characterized in that** the removed stone material (3) and the sand, respectively, and/or the stone is washed by using water, and that the salt and salt mixture, respectively, contained in the water used is subsequently separated from the water and fed back at least in part to the salt melt, this washing process preferably being carried out at a water temperature above room temperature, in particular in the range of from 40-80°C, preferably in the range from 50-70°C.

7. Method according to claim 6, **characterized in that** the removed stone material (3) and the sand, respectively, and/or the stone undergoes the washing process while still in the hot state after the salt melt, and that the heat stored in the stone material (3) and the sand, respectively, and/or the stone is used at least partially, preferably completely, for heating the washing water.

8. Method according to any one of preceding claims 6-7, **characterized in that** the separation of the salt solution takes place at least partially by precipitation, optionally in combination with centrifugation, and/or evaporation and/or reverse osmosis.

9. Method according to any one of preceding claims 6-8, **characterized in that** a multistage, preferably at least two-stage or at least three-stage washing process, is used, wherein washing water and removed stone material (3) and the sand, respectively, and/or the stone are conveyed according to the counter-flow principle, and wherein the separation of water and salt and salt mixture, respectively, is preferably carried out exclusively with the washing water, which is carried away in the first washing stage (20) after the salt melt (2).

10. Method according to any one of preceding claims 6-9, **characterized in that** the separation of water and salt and salt mixture, respectively, is carried out in a multistage, preferably in a at least two-stage or in a at least three-stage manner, wherein a first separation stage (17) is preferably a precipitation stage and a settling basin, respectively, optionally followed by or combined with a centrifugation (23) and the latter is preferably followed by a second separation stage using evaporation (18) and/or reverse osmosis (32).

11. Method according to claim 10, **characterized in that** the partially separated water is fed back at least partially into the washing process after the first separation stage (17), preferably in a further washing stage (21) downstream of the first washing stage (20) after the salt melt.

12. Method according to any one of the preceding claims, **characterized in that** the required process heat, in particular for ensuring the temperature of the salt melt, and/or for cleaning washing water and separating the same from salt and impurities, respectively, and/or for heating washing water, is made available at least partially or completely by combustion of the separated bitumen (5).

**13.** Method according to any one of the preceding claims, **characterized in that** the road surfacing-asphalt breakup (1) and oil sand, respectively, is fed to the salt melt (2) with a predetermined breaking value, preferably up to max. 32 mm particle size.

**14.** Method according to any one of the preceding claims, **characterized in that** the bitumen (5) and oil, respectively, floating on the salt melt (2) and being skimmed off from the salt melt (2) after passage through the salt melt (2) is fed to a further separation, preferably **in that** in a first step the separated fraction undergoes a grinding process down to a defined particle size, and in a second step this mechanically size-reduced fraction is further separated, either by renewed use of a salt melt or by using another separating method, preferably a physical-chemical separating method for fine-grained solids based on the different surface wettability of the particles, preferably a flotation method.

**15.** Device configured for carrying out the method according to any one of claims 1 to 14 for recovering bitumen from road surfacing-asphalt breakup (1), or for the separation of oil and sand and stone, respectively, from oil sand comprising at least one heatable, preferably groove-shaped basin for receiving and liquefaction of a salt mixture with a low melting point of less than 200°C, preferably a eutectic mixture of LiNO$_3$/KNO$_3$, for producing of a salt melt (2), with supply means upstream of the basin (1) for the road surfacing-asphalt breakup (1) and the oil sand, respectively, with a predetermined breaking value,
with conveying means arranged in the basin for transport or for stirring the road surfacing-asphalt breakup (1) and oil sand, respectively, through the salt melt (2) and with scraping means arranged at the end of the conveying path of the basin for skimming off and further transporting the bitumen (5) and oil, respectively, which has been separated from the stone material of the road surfacing-asphalt breakup (1) and is floating on the salt melt (2),
with removal means arranged at the end of the conveying path of the basin for the bitumen-free stone material, and the sand or the stone of the oil sand, respectively, which has sunk in the salt melt, as well as
at least one washing stage (15, 16, 20, 21,22) for washing away the residues of the salt melt on the stone material, and the sand or the stone of the oil sand, respectively,
at least one separation stage (17,18,23,32) for separation of salt and salt mixture, respectively, and washing water as well as means for the at least partial feedback of the separated salt and salt mixture, respectively, into the salt melt (2).

**Revendications**

**1.** Un procédé de récupération de bitume à partir de gravats d'asphalte de revêtement routier (1) ou de séparation de sable pétrolifère en pétrole et sable, respectivement roche, où les gravats d'asphalte de revêtement routier (1) bitumineux, respectivement le sable pétrolifère sont introduits dans une fusion saline (2), où le bitume (5) respectivement le pétrole surnagent et sont décantés à partir de la fusion saline (2) après leur passage dans la fusion saline (2), et où le matériau de pierre (3) respectivement le sable et/ou la roche se déposent dans la fusion saline (2) et sont éliminés,
**caractérisé en ce que** la température de la fusion saline (2) se situe dans la plage de 200°C à 300 °C et le temps de séjour moyen des gravats d'asphalte de revêtement routier (1) dans la fusion saline (2) se situe dans la plage d'au moins 5 minutes, que dans le cas de la fusion saline il s'agit d'un mélange de différents sels, lequel présente une température de fusion de moins de 200 °C, en forme d'un mélange ternaire à base de NaNO$_3$/LiNO$_3$/KNO$_3$ ou en forme d'un mélange binaire à base de LiNO$_3$/KNO$_3$.

**2.** Un procédé selon la revendication 1, **caractérisé en ce que** la température de la fusion saline (2) se situe dans la plage 250 °C à 300 °C.

**3.** Un procédé selon une des revendications précédentes, **caractérisé en ce que** le temps de séjour moyen des gravats d'asphalte de revêtement routier (1) dans la fusion saline (2) se situe dans la plage de 5 à 30 minutes, préférablement dans la plage de 10 à 20 minutes.

**4.** Un procédé selon une des revendications précédentes, **caractérisé en ce que** il s'agit d'un mélange des différentes sels, lesquels présentent une température de fusion dans la plage de 80 °C à 150 °C, préférablement dans la plage de 100 °C à 140 °C.

**5.** Un procédé selon une des revendications précédentes, **caractérisé en ce que** il s'agit d'un mélange eutectique, et/ou d'un mélange binaire de LiNO$_3$/KNO$_3$ ayant pourcentage molaire de KNO$_3$ de 50 à 70 % et une température du fusion dans la plage de 120 à 140°C.

**6.** Un procédé selon une des revendications précédentes, **caractérisé en ce que** le matériau pierre (3) éliminé, respectivement le sable et/ou la roche, sont rincés en utilisant de l'eau, et que le sel, respectivement le mélange de sel, contenu dans l'eau utilisée est séparé par la suite de l'eau et est au moins partiellement amené à la fusion saline, où préférablement ce procédé de rinçage est effectué à une température de l'eau supérieure à température ambiante, en particulier dans la plage de 40 °C à 80 °C, préférablement dans le domaine de 50 à 70°C.

**7.** Le procédé selon la revendication 6, **caractérisé en ce que** le matériau de pierre (3) éliminé, respectivement le sable et/ou la roche, subissent le procédé de rinçage dans un état encore chaud après la fusion saline, et que la chaleur emmagasinée dans le matériau de pierre (3), respectivement le sable et / ou la roche, est utilisée au moins partiellement, préférablement entièrement pour le chauffage de l'eau de rinçage.

**8.** Le procédé selon une des revendications précédentes 6 à 7, **caractérisé en ce que** la séparation de la solution saline s'effectue au moins partiellement par précipitation, éventuellement en combinaison avec une centrifugation, et / ou évaporation et / ou osmose inversé.

**9.** Le procédé selon une des revendications précédentes 6 à 8, **caractérisé en ce que** un procédé de rinçage à plusieurs étapes, préférablement à au moins deux étapes ou à au moins trois étapes est utilisé, pendant lequel l'eau de rinçage et le matériau de pierre (3) éliminé, respectivement le sable et / ou la roche, sont guidés selon le principe de circulation à contrecourant, et où la séparation d'eau et de sel, respectivement de mélange de sel, est effectué préférablement exclusivement avec l'eau de rinçage, laquelle est éliminée au niveau de la première étape de rinçage (20) après la fusion saline (2).

**10.** Le procédé selon une des revendications précédentes 6 à 9, **caractérisé en ce que** la séparation d'eau et de sel, respectivement de mélange de sel, est effectué en plusieurs étapes, préférablement en au moins deux étapes et en au moins trois étapes, où préférablement la première étape de séparation (17) est une étape de précipitation , respectivement un bassin de décantation, éventuellement suivie de ou combinée avec une centrifugation (23) et préférablement une deuxième étape de séparation s'y ajoute en utilisant l'évaporation (18) et / ou l'osmose inverse (32).

**11.** Le procédé selon la revendication 10, **caractérisé en ce que** l'eau partiellement séparée est au moins partiellement recyclée dans le procède de rinçage après la première étape de séparation (17), préférablement dans une étape de rinçage supplémentaire (21) suivant à la première étape de rinçage (20) après la fusion saline.

**12.** Le procédé selon une des revendications précédentes, **caractérisé en ce que** la chaleur de procédé nécessaire, en particulier pour la garantie de la température de la fusion saline, et / ou pour le nettoyage de l'eau de rinçage respectivement la séparation de la même de sel et d'impuretés, et / ou pour le chauffage d'eau de rinçage, est au moins partiellement ou entièrement mise à disposition par combustion du bitume séparé (5).

**13.** Le procédé selon une des revendications précédentes, **caractérisé en ce que** les gravats d'asphalte de revêtement routier (1), respectivement le sable pétrolifère, ayant un index de broyage prédéterminés, préférablement ayant une taille de grain de 32 mm au maximum sont amenés à la fusion saline (2)

**14.** Le procédé selon une des revendications précédentes, **caractérisé en ce que** le bitume (5), respectivement le pétrole, surnageant la fusion saline (2) et décanté à partir de la fusion saline (2) après leur passage dans la fusion saline (2) sont amenés vers une séparation supplémentaire, préférablement en soumettant la fraction éliminée à un procédé de broyage jusqu'à obtention d'une taille de particule définie dans une première étape, et dans une deuxième étape cette fraction mécaniquement réduite est séparée d'avantage, ou bien en utilisant à nouveau une fusion saline ou en utilisant un autre procédé de séparation, préférablement un procédé de séparation physico-chimique pour matériaux solides à grain fin exploitant les différentes mouillabilités des particules, préférablement un procédé de flottation.

**15.** Une installation configurée

pour effectuer le procédé selon une des revendications 1 à 14, pour la récupération de bitume à partir de gravats d'asphalte de revêtement routier (1), ou
pour la séparation de pétrole et de sable, respectivement de roche, de sable pétrolifère comprenant au moins un bassin pouvant être chauffé, préférablement en forme de gouttière, pour l'admission et la liquéfaction du mélange de sels ayant une température de fusion de moins de 200 ° C, préférablement d'un mélange eutectique

de LiNO$_3$ / KNO$_3$, pour la production d'un fusion saline (2),

ayant des moyens d'admissions en amont du bassin (1) pour les gravats d'asphalte de revêtements routier (1), respectivement le sable pétrolifère, ayant un index de broyage prédéterminé, ayant des moyens de transport disposés dans le bassin pour le transport ou le brassage des gravats d'asphalte de revêtement routier (1), respectivement du sable pétrolifère, à travers la fusion saline (2), et

ayant des moyens d'élimination disposés à la fin du chemin de bassin pour décanter et acheminer le bitume surnageant (5), respectivement le pétrole surnageant, se détachant du matériau de pierre des gravats d'asphalte de revêtement routier (1),

ayant de moyen d'évacuation disposés à la fin du chemin du bassin pour le matériau de pierre, respectivement le sable ou la roche, libres de bitume, déposés dans la fusion saline, respectivement le sable ou la roche du sable pétrolifère, ainsi que

au moins une étape de rinçage (15, 16, 20, 21, 22) pour le rinçage des résidus de fusion saline sur le matériau de pierre, respectivement sur le sable ou la roche, du sable pétrolifère,

au moins une étape de séparation (17, 18, 23, 32) pour la séparation de sel, respectivement de mélange de sels, et d'eau de rinçage ainsi que des moyens pour au moins le recyclage partiel du sel, respectivement du mélange de sels, séparés dans la fusion saline (2).

**FIG. 1**

**FIG. 2**

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008110486 A
- US 4545891 A
- US 4655839 A